## Europäisches Patentamt
## European Patent Office
## Office européen des brevets

(19)

(11) Numéro de publication: **0 078 200**
A1

(12) **DEMANDE DE BREVET EUROPEEN**

(21) Numéro de dépôt: 82401918.6

(22) Date de dépôt: 19.10.82

(51) Int. Cl.³: **C 04 B 35/00**
H 01 G 4/12, H 01 B 3/12

(30) Priorité: 23.10.81 FR 8119936

(43) Date de publication de la demande:
04.05.83 Bulletin 83/18

(84) Etats contractants désignés:
DE GB IT NL

(71) Demandeur: L.C.C.-C.I.C.E. - COMPAGNIE
EUROPEENNE DE COMPOSANTS ELECTRONIQUES
101, Boulevard Murat
F-75781 Paris Cédex 16(FR)

(72) Inventeur: Favart, Catherine
THOMSON-CSF SCPI 173, bld Haussamnn
F-75379 Paris Cedex 08(FR)

(74) Mandataire: Vesin, Jacques et al,
THOMSON-CSF SCPI 173, Bld Haussmann
F-75379 Paris Cedex 08(FR)

(54) **Composition céramique destinée à la réalisation de composants électriques, et procédé de préparation de cette composition.**

(57) L'invention concerne une céramique, ayant des propriétés électriques et diélectriques améliorées, ainsi qu'une température de frittage inférieure à 1000° C.

Selon l'invention, les caractéristiques de constante diélectrique ε, de tangente d'angle de perte tg δ et de résistivité ρ d'une céramique de type pérovskite sont améliorées en valeur absolue et en tenue en température par l'addition de faibles quantités d'au moins l'un parmi les trois oxydes $Al_2O_3$, $V_2O_5$, MnO, l'addition simultanée de ces trois oxydes entraînant des résultats surprenants.

Application à la réalisation de composants pour l'électronique, notamment de condensateurs céramiques.

FIG.4

COMPOSITION CERAMIQUE DESTINEE A LA REALISATION
DE COMPOSANTS ELECTRIQUES, ET PROCEDE DE PREPARATION
DE CETTE COMPOSITION

La présente invention concerne un matériau céramique doté de propriétés électriques et thermiques intéressantes, destiné en particulier à la fabrication de condensateurs multicouches céramiques, pour lesquels il est préférable que la température de frittage, après dépôt des métallisations d'électrodes soit la plus basse possible, ainsi qu'une constante diélectrique élevée et une faible dérive en température de l'angle de perte.

Un certain nombre de matériaux céramiques ayant des propriétés électriques et diélectriques intéressantes sont connus. Ceux possèdant des constantes diélectriques $\varepsilon$ très élevées sont réalisés avec des composés ferroélectriques, particulièrement avec des oxydes ferroélectriques. Parmi ces derniers, on connaît des composés complexes à structure pérovskite ou pyrochlore à base d'oxyde de plomb qui ont l'avantage de pouvoir être synthétisés à relativement basse température, c'est-à-dire inférieure à 1000° C. Ainsi : $Pb\,(Mg_{1/3}\,Nb_{2/3})\,O_3$, $Pb\,(Zn_{1/3}\,Nb_{2/3})\,O_3$, $Pb\,(Fe_{1/2}\,Nb_{1/2})\,O_3$, $Pb\,(Fe_{2/3}\,W_{1/3})\,O_3$ sont des composés connus comme étant ferroélectriques et présentant des constantes diélectriques élevées.

Des solutions solides entre plusieurs composés tels que ceux cités ci-dessus sont également connues comme présentant une haute constante diélectrique à la température ambiante. On peut citer, par exemple, le composé suivant :

$$Pb\left[(Fe_{2/3}\,W_{1/3})\right]_{0,3}\left[(Fe_{1/2}\,Nb_{1/2})\right]_{0,7}O_3$$

comme ayant certaines propriétés intéressantes.

Cependant, les matériaux céramiques réalisés suivant l'art connu à partir de composés de ce genre ont des inconvénients qui les rendent difficilement utilisables dans la pratique, par exemple dans la fabrication de condensateurs.

En effet, ces matériaux, bien que présentant des constantes diélectriques importantes ($\varepsilon > 8000$ à la température ambiante) ont des tangentes d'angle de pertes tg $\delta$ élevées ; des valeurs de 0,05 sont citées dans la littérature mais on mesure plus généralement 0,15 à 0,20 à la fréquence de 1 kHz et à la température ambiante. Un deuxième inconvénient est que ces matériaux ont des résistances d'isolement $\rho_i$ trop faibles, au plus de quelques $10^7 \Omega$ .cm à $10^8 \Omega$ .cm.

La présente invention a pour objet des céramiques qui, tout en présentant les avantages des matériaux précédents, frittage à basse température et hautes constantes diélectriques $\varepsilon$ , n'en présentent pas les inconvénients, mais au contraire, ont une tangente d'angle de perte tg $\delta$ faible et stable en température, et une résistance d'isolement élevée.

Les moyens mis en oeuvre selon l'invention pour obtenir de telles performances sont :

- Le contrôle de la quantité d'oxyde de plomb introduite dans la composition, c'est-à-dire choix de la stoéchiométrie en plomb du composé ;

- L'addition d'oxydes de nature très particulière, utilisés de plus en quantités très précises dans la fabrication de la céramique pour obtenir les caractéristiques souhaitées, qui, dans certains cas, sont le résultat d'un effet inattendu de l'addition d'un oxyde. Les oxydes ajoutés sont essentiellement les oxydes d'aluminium $Al_2O_3$, de vanadium $V_2O_5$ et de manganèse MnO.

De façon plus précise, l'invention concerne une composition céramique destinée à la réalisation de composants électriques, caractérisée en ce qu'elle comprend un matériau de base composé d'oxydes de plomb, de fer, de tungstène et de niobium, auquel sont ajoutés, en vue d'améliorer ses caractéristiques de constante diélectrique $\varepsilon$ , de tangente d'angle de perte tg $\delta$ et de résistivité $\rho$ , les trois oxydes d'aluminium $Al_2O_3$, de vanadium $V_2O_5$ et de manganèse MnO.

Une céramique comprenant les perfectionnements de l'invention permet de réaliser des produits diélectriques dotés des avantages suivants :

- des constantes diélectriques $\varepsilon$ élevées, comprises entre 4000 et 15.000 à la température ambiante ;

- des tangentes d'angle de pertes réduites, $tg\delta < 0,03$ mesurées à 1 kHz et à la température ambiante ;
- des résistances d'isolement très importantes, $\rho_i > 10^{10}$ $\Omega$.cm à la température ambiante ;
- de plus, ces caractéristiques varient peu en fonction de la température, d'une manière compatible avec les applications usuelles dans l'électronique professionnelle.

L'invention sera mieux comprise par la description de plusieurs exemples de réalisation, lesquels s'appuient sur des figures jointes qui donnent les résultats de mesures et qui représentent :

- figures 1 et 2 : évolution de la constante diélectrique $\varepsilon$, de la tangente de l'angle de pertes $tg\delta$ et de la résistivité $\rho_i$ en fonction de la teneur en oxyde de plomb Pb0, dans une céramique connue.

- figures 3 et 4 : évolution de $\varepsilon$, $tg\delta$ et $\rho_i$ en fonction de la température $\theta$, pour une céramique connue comparativement à trois exemples de céramiques selon l'invention.

- figures 5 et 6 : évolution de $\varepsilon$, $tg\delta$ et $\rho_i$ en fonction de la teneur en $V_2O_5$, dans un premier exemple de céramique selon l'invention.

- figures 7 et 8 : évolution de $\varepsilon$, $tg\delta$ et $\rho_i$ en fonction de la teneur en $Al_2O_3 + V_2O_5$, dans un second exemple de céramique selon l'invention.

figures 9 et 10 : évolution de $\varepsilon$, $tg\delta$ et $\rho_i$ en fonction de la teneur de Mn0, dans un troisième exemple de céramique selon l'invention.

Le matériau de base, produit de départ des céramiques selon l'invention, est une pérovskite, solution solide entre des oxydes de plomb, de fer, de niobium et de tungstène dont on a modifié la composition en oxyde de plomb Pb0 en vue d'obtenir les caractéristiques $\varepsilon$, $tg\delta$ et $\rho_i$ les plus intéressantes pour les applications envisagées, c'est-à-dire les céramiques diélectriques.

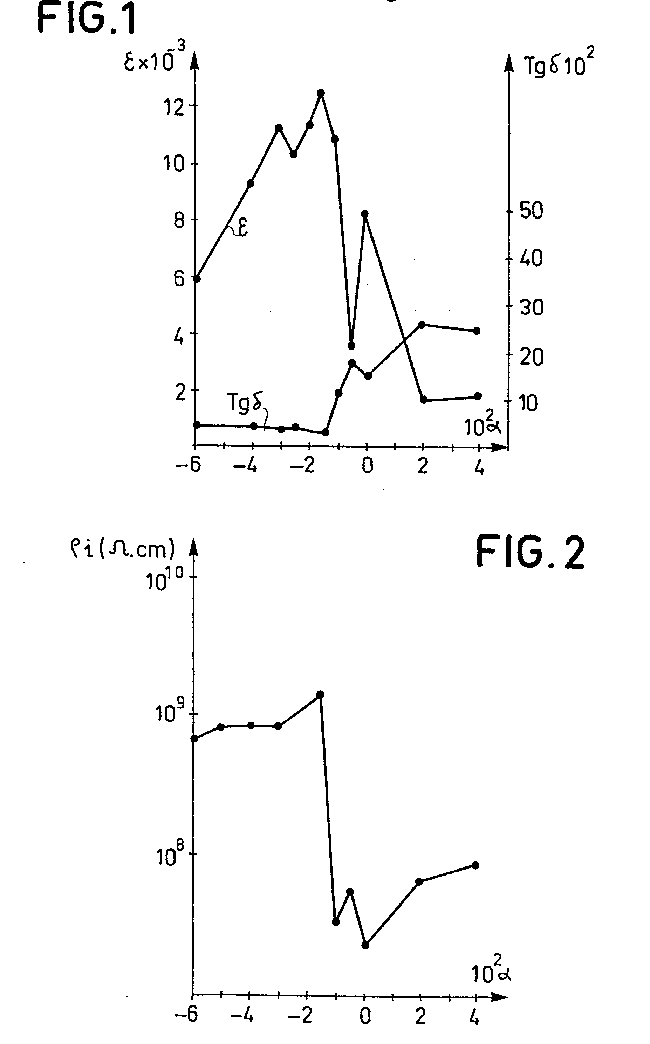

Les figures 1 et 2 donnent les résultats de mesures sur ce produit de

4

départ, en fonction de la teneur en PbO.

Une série de matériaux est réalisée de la manière suivante :

On prépare d'abord séparément deux séries de composés en partant des formules chimiques :

$$Pb_{1+\alpha}(Fe_{2/3} W_{1/3}) O_{3+\alpha} \quad (1)$$
$$Pb_{1+\alpha}(Fe_{1/2} Nb_{1/2}) O_{3+\alpha} \quad (2)$$

$\alpha$ représente une variation de la stoéchiométrie pouvant aller de $- 6.10^{-2}$ à $+ 4.10^{-2}$. Pour cela, on pèse dans la proportion des formules chimiques (1) et (2), les matières premières nécessaires sous forme d'oxydes de fer, de niobium ou de plomb et d'acide tungstique.

Un premier mélange-broyage des constituants de chacun des composés (1) et (2) ci-dessus cités, est effectué dans un récipient contenant des billes de zircone et de l'eau désionisée.

Après séchage de la barbotine, la poudre est tamisée.

Les poudres ainsi obtenues pour chacun des deux composés sont pesées dans les proportions suivantes :

30 % molaire de la formule (1)

70 % molaire de la formule (2)

un deuxième mélange-broyage est réalisé dans les mêmes conditions que celles du premier.

Après séchage de la barbotine, la poudre tamisée est versée dans des récipients en alumine et est calcinée à l'air dans un four statique. Le cycle température-temps est le suivant :

. vitesse de montée égale à environ 600°/h

. température de palier égale à 720° C pendant 1 h

. vitesse de descente égale à celle de l'inertie du four.

Le produit calciné est ensuite mélange et broyé dans les mêmes conditions que celle du premier mélange-broyage.

La barbotine est séchée et la poudre est tamisée.

Après enrobage de la poudre par un liant organique (7 % en poids d'une solution aqueuse à 10 % d'alcool polyvinylique) le granulé obtenu est pressé sous forme d'un disque puis fritté à l'air dans un four selon la programmation température-temps suivante :

. Vitesse de montée : 100° C/h

. température du premier palier : 600° C

. durée du palier : 15 mn

. vitesse de montée : 300° C/h

. température du deuxième palier : 950° C

. durée du palier : 1 heure

. vitesse de descente : suivant l'inertie du four.

Les pastilles frittées sont métallisées sur les deux faces avec une argenture cuite au four à 700° C, de type habituel pour ce genre de diélectrique, afin de préparer des condensateurs destinés à la mesure des caractéristiques des céramiques. L'évolution des différentes caractéristiques diélectriques et électriques en fonction de la teneur en oxyde de plomb PbO, dans une pluralité de matériaux de base préparés selon cette méthode, a permis de mettre en évidence que les compositions caractérisées par un défaut d'oxyde de plomb sont les plus performantes.

La préparation la plus performante est obtenue pour un défaut d'oxyde de plomb égal à 1,5 % molaire correspondant à $\alpha = -0,015$ : en effet, les figures 1 et 2 mettent nettement en évidence que, aux environs de -1,5 % à -2 % de PbO, la constante diélectrique $\varepsilon$ et la résistivité $\rho_i$ sont à leur maximum, tandis que la tangente de l'angle de pertes $tg\delta$ est à son minimum.

La composition correspondant à $\alpha = -0,015$ sera appelée composition A par la suite du texte, en vue de simplification.

Les principales caractéristiques de condensateurs élaborés à partir de compositions correspondant à $\alpha = 0$ et $\alpha = -0,015$ sont données, les mesures étant faites à 1 kHz, et à température ambiante :

| $\alpha$ | $\varepsilon$ | $10^2.tg\delta$ | $\rho_i(\Omega.cm)$ |
|---|---|---|---|
| 0 | 8.000 | 15 | $2.10^7$ |
| 0,015 | 12.000 | 4 | $10^9$ |

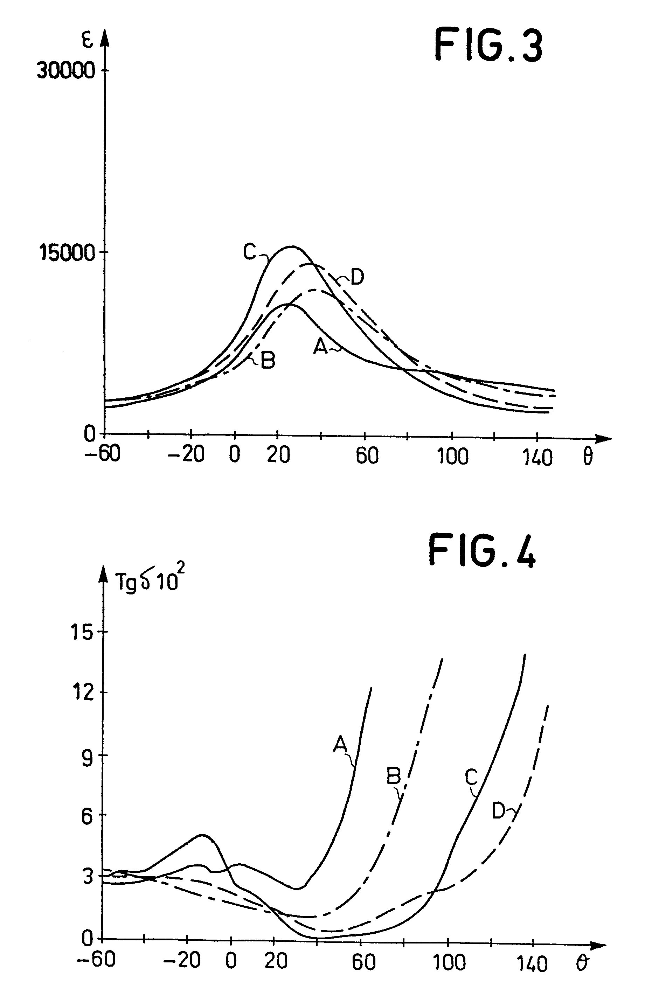

Les figures 3 et 4 donnent les variations de la constante diélectrique $\varepsilon$ et de l'angle de pertes $tg\delta$ mesurés à 1 kHz en fonction de la température, entre -60 et +140°C. La courbe A correspond à la composition ci-dessus décrite et appelée conventionnellement composition A ; les courbes B, C et D correspondent aux perfectionnements selon l'invention qui vont être décrits par la suite. La comparaison entre la courbe A d'une part et les courbes B, C et D sera effectuée ultérieurement.

Selon un premier perfectionnement de l'invention, on a trouvé qu'une addition d'oxyde de vanadium $V_2O_5$, en quantité comprise entre 0 et 1 %, augmente la constante diélectrique $\varepsilon$ et la résistivité $\rho_i$.

Pour cela, on réalise une série de matériaux de la même manière que dans l'exemple cité avec la composition A (soit avec $\alpha = -0,015$) mais des additions d'oxyde de vanadium $V_2O_5$ sont effectuées lors du mélange du dernier broyage avant séchage et enrobage de la poudre. Toutes les conditions de préparation restent par ailleurs celles de l'exemple précédent, les mesures sont également faites dans les mêmes conditions.

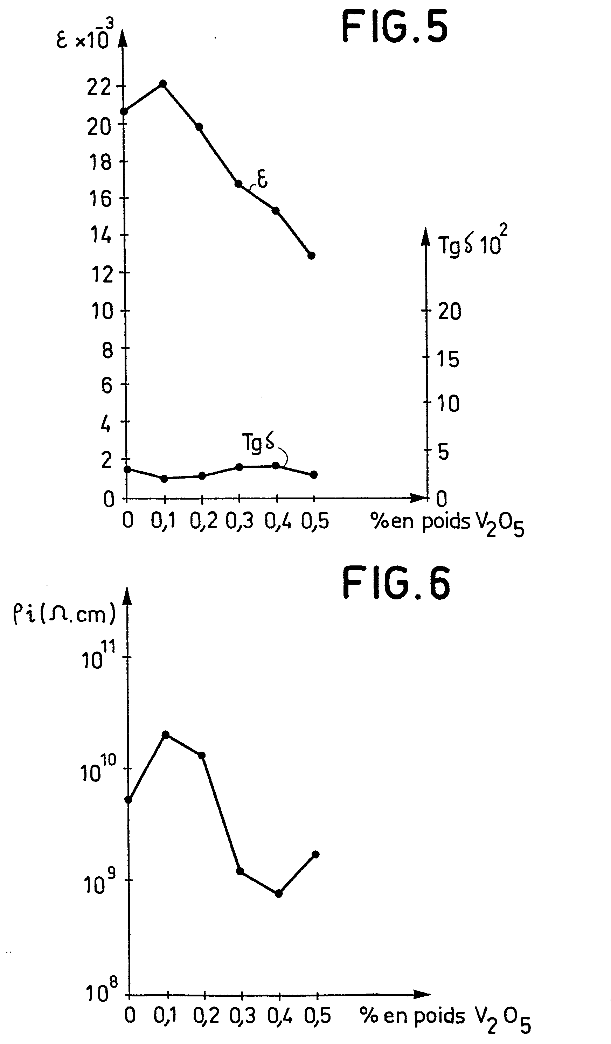

Les figures 5 et 6 donnent la variation de $\varepsilon$, $tg\delta$ et $\rho_i$ pour différentes quantités d'oxyde de vanadium ajoutées à la composition A.

On constate une constante diélectrique $\varepsilon$ importante supérieure à 20.000, obtenue pour une addition voisine de 0,1 % en poids de $V_2O_5$, avec des pertes diélectriques assez faibles ($tg\delta = 2.10^{-2}$) cependant que la résistivité $\rho_i$, qui était de $10^9$ $\Omega$.cm pour la composition A, est améliorée, à $2.10^{10}$ $\Omega$.cm environ.

Ces résultats, bien qu'intéressants, sont encore améliorés, selon l'invention, par l'addition d'oxyde d'aluminium $Al_2O_3$, en plus de l'oxyde de vanadium $V_2O_5$.

Selon ce second perfectionnement de l'invention, on prépare une série de matériaux en réalisant d'abord toutes les opérations du premier exemple avec la composition A correspondant à $\alpha = -0,015$, et ceci jusqu'à la calcination après le deuxième mélange-broyage.

Une addition équimoléculaire des deux oxydes $Al_2O_3$ et $V_2O_5$ est alors introduit dans le matériau calciné correspondant à la composition A, en différentes proportions variant de 800 ppm à 3 % en poids.

La préparation est ensuite poursuivie et achevée comme dans le premier exemple, avec mélange-broyage, séchage, enrobage, frittage, métallisation des pastilles de condensateurs.

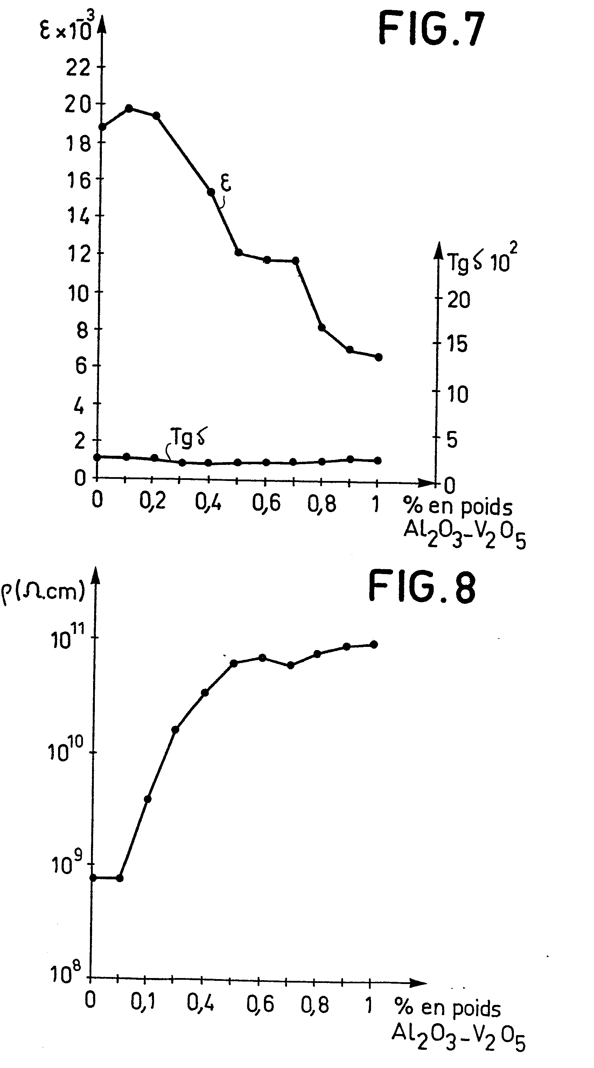

Les caractéristiques électriques sont mesurées dans les mêmes conditions que précédemment, et rapportées sur les figures 7 et 8.

La figure 8 montre l'effet important et très intéressant obtenu sur la résistivité. La figure 7 donne les variations de $\varepsilon$ et tg$\delta$ en fonction de l'addition à la température ambiante : l'addition de $Al_2O_3/V_2O_5$ n'a pratiquement pas d'influence sur la tangente de l'angle de pertes tg$\delta$ , mais une très faible quantité, de l'ordre de 0,1 %, améliore la constante diélectrique .

Le matériau correspondant à 0,5 % de l'addition $Al_2O_3/V_2O_5$ en poids, dont la composition sera appelée B, a les caractéristiques données ci-dessous. L'amélioration principale obtenue par cette addition est une augmentation d'un facteur 60 de la résistivité $\rho_i$ comparée à celle de la céramique de composition A.

| Addition | % en poids | $\varepsilon$ | $10^2.\text{tg }\delta$ | $\rho_i(\Omega.cm)$ |
|---|---|---|---|---|
| $Al_2O_3/V_2O_5$ | 0,5 | 12.000 | 2 | $6.10^{10}$ |

Les courbes B, sur les figures 3 et 4, donnent la variation de $\varepsilon$ et tg $\delta$ en fonction de la température pour la céramique de composition B. On voit sur la figure 3 que le maximum de $\varepsilon$ est repoussé vers de plus hautes températures, tandis que tg$\delta$ est diminué dans un intervalle appréciable de température la remontée de la courbe étant repoussée vers les plus hautes températures, sur la figure 4.

Ces résultats, intéressants, sont encore améliorés par un troisième perfectionnement selon l'invention, par addition d'oxyde de manganèse MnO, comme le montre la préparation d'une céramique de composition A dans laquelle on ajoute du MnO.

On réalise une série de matériaux de la même manière que dans le second exemple, mais l'addition pratiquée est constituée par du manganèse, de manière à réaliser les compositions suivantes :

Composition A + t % de MnO.

t étant compris entre 50 ppm et 2 % en poids du matériau final. Le manganèse est introduit sous forme de carbonate dans le mélange calciné correspondant à la composition A, avec le dernier broyage. Le carbonate de manganèse est transformé en MnO au cours du frittage à l'air.

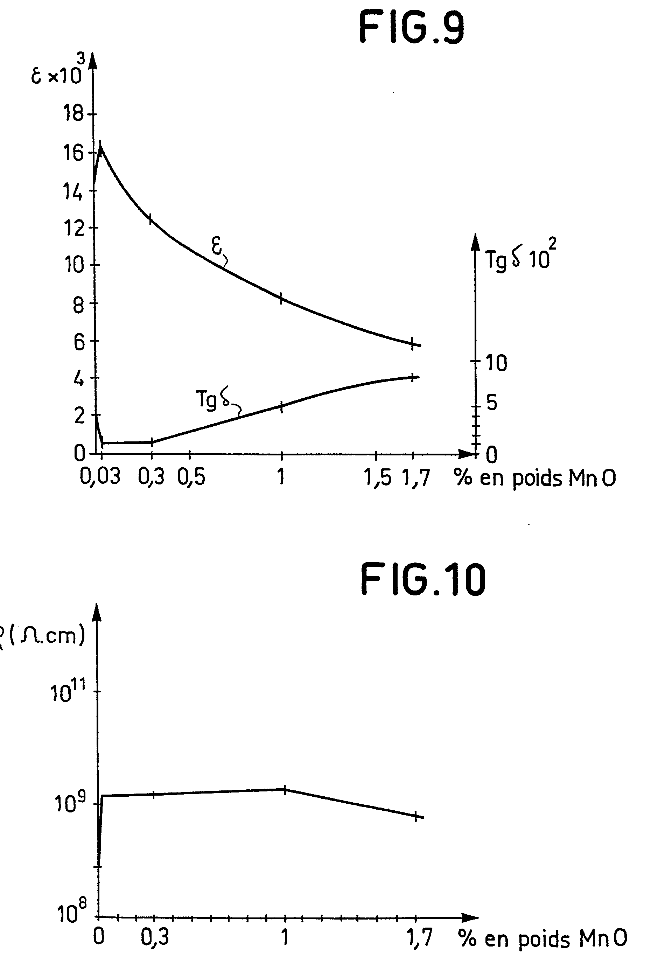

Les figures 9 et 10 donnent les effets obtenus par cette addition sur

8

les caractéristiques diélectriques, $\varepsilon$ et tg $\delta$ et la résistivité $\rho_i$.

Le tableau ci-dessous donne les caractéristiques, à la température ambiante, correspondant à une valeur intéressante de t, soit t = 0,03 %.La composition correspondante sera appelée composition C.

| Addition | % en poids | $\varepsilon$ | $10^2.tg\,\delta$ | $\rho_i\,\Omega.cm$ |
|----------|-----------|---------------|-------------------|---------------------|
| MnO | 0,03 | 16.000 | 1,5 | $3.10^9$ |

Pour la céramique correspondant à cette composition, les figures 3 et 4 donnent $\varepsilon$ et tg $\delta$ en fonction de la température (courbes C).

L'addition de MnO ne change pas la température du maximum de $\varepsilon$ mais accroît la valeur de ce maximum. D'autre part, la température de remontée des pertes diélectriques tg $\delta$ est repoussée vers les hautes températures, ce qui est un effet à la fois surprenant et très intéressant.

La coopération des différentes additions qui ont été décrites jusqu'ici communique à la céramique ainsi réalisée, avec addition simultanée de $Al_2O_3$, $V_2O_5$ et MnO, des caractéristiques très intéressantes.

On prépare des céramiques de la même manière que dans le troisième exemple mais en faisant des additions simultanées de $Al_2O_3$, $V_2O_5$ et de manganèse introduit comme dans le quatrième exemple. Par exemple, on réalise des matériaux ayant des compositions qui correspondent à :

Composition B + t % de MnO.

Le tableau ci-dessous donne des résultats sur deux matériaux de ce type, qui présentent à la fois une haute constante diélectrique $\varepsilon$, de faibles tangentes d'angle de pertes tg $\delta$ et des résistivités $\rho_i$ très élevées.

9

| Addition | | | | $\varepsilon$ | $10^2 \cdot \text{tg}\delta$ | $\rho_i$ ( $\Omega.$cm) |
|---|---|---|---|---|---|---|
| nature | % en poids | nature | % en poids | | | |
| $Al_2O_3$-$V_2O_5$ | 0,5 | MnO | 0,034 | 13.100 | 1,2 | $3.10^{11}$ |
| | 0,5 | | 0,085 | 12.800 | 0,7 | $1,5.10^{11}$ |

Les figures 3 et 4 donnent également (courbes D) les variations en température de $\varepsilon$ et tg$\delta$ pour un matériau de composition D, définie par :

Composition D = composition B + 0,034 % en poids de MnO

La constante diélectrique $\varepsilon$ a son maximum à la même température que le matériau correspondant à la composition B, mais ce maximum a une valeur augmentée. De plus, les pertes diélectriques tg$\delta$ sont diminuées pour la composition D par rapport aux compositions A et B, dans un intervalle important de température. La remontée de tg$\delta$ est repoussée vers une plus haute température et est supérieure à ce qui est obtenu dans les cas B ou C. On obtient ainsi un ensemble très intéressant de caractéristiques, comme le montre le tableau comparatif ci-dessous, qui rapproche les caractéristiques mesurées sur le matériau de base (A) et sur les céramiques selon l'invention comportant des additions de $V_2O_5$, $Al_2O_3$ et MnO :

| | Matériau de base (A) | A +$V_2O_5$ | A +$Al_2O_3$-$V_2O_5$ (B) | A + MnO (C) | A+MnO +$Al_2O_3$-$V_2O_5$ (D) |
|---|---|---|---|---|---|
| $\varepsilon$ | 12.000 | 20.000 | 12.000 | 16.000 | 13.100 |
| $10^2 \cdot \text{tg }\delta$ | 4 | 2 | 2 | 1,5 | 1,2 |
| $\rho_i$ | $10^9$ | $2.10^{10}$ | $6.10^{10}$ | $3.10^9$ | $3.10^{11}$ |

On constate que, si la composition D, correspondant à des additions simultanées de $Al_2O_3$, $V_2O_5$ et MnO, ne fournit pas la meilleure valeur de constante diélectrique $\varepsilon$ , cette valeur est cependant élevée et supérieure à celle du matériau de base connu, mais que par contre les résultats de

10

mesures de tg$\delta$ et $\rho_i$ sont surprenants, et supérieurs à ce que l'on pourrait attendre d'après les mesures sur les compositions B et C.

En outre, les températures de frittage de ces céramiques, comprises entre 900 et 960° C, en font des matériaux de choix pour la réalisation de condensateurs à diélectrique céramique.

11

## REVENDICATIONS

1. Composition céramique destinée à la réalisation de composants électriques, caractérisée en ce que le matériau de base est une pérovskite de formule chimique non stoéchiométrique $\left[Pb_{1+\alpha}(Fe_{2/3}W_{1/3})O_{3+\alpha}\right]0,3 + \left[Pb_{1+\alpha}(Fe_{1/2}Nb_{1/2})O_{3+\alpha}\right]0,7$, dans laquelle $\alpha$ représente une variation de la stoechiométrie comprise entre $-6.10^{-2}$ et $+4.10^{-2}$, et en ce que, en vue d'améliorer les caractéristiques de constante diélectrique $\varepsilon$, de tangente d'angle de pertes $tg\delta$ et de résistivité $\rho$, sont ajoutés trois oxydes d'aluminium $Al_2O_3$, de vanadium $V_2O_5$ et de maganèse $MnO$.

2. Composition céramique selon la revendication 2, caractérisée en ce que la teneur en oxyde de plomb $PbO$ du matériau de base est en défaut de 1,5 % ( $\alpha = -0,015.$)

3. Composition céramique selon la revendication 1, caractérisée en ce que l'addition d'oxyde de manganèse $MnO$ est comprise entre 50 ppm et 2 % en poids du matériau final.

4. Composition céramique selon la revendication 1, caractérisée en ce que l'addition équimoléculaire d'oxydes d'aluminium $Al_2O_3$ et de vanadium $V_2O_5$ est comprise entre 800 ppm et 3 % en poids du matériau final.

5. Procédé de préparation d'une composition céramique, selon la revendication 1, caractérisée en ce qu'elle est obtenue par la suite des opérations suivantes :

- premier mélange-broyage, en phase aqueuse d'une part des oxydes constituant le composé $Pb_{1+\alpha}(Fe_{2/3}W_{1/3})O_{3+\alpha}$ et d'autre part, des oxydes constituant le composé $Pb_{1+\alpha}(Fe_{1/2}Nb_{1/2})O_{3+\alpha}$, séchage et tamisage des deux poudres ;

- second mélange-broyage, en phase aqueuse, d'un mélange de 30 % en moles de $Pb_{1+\alpha}(Fe_{2/3}W_{1/3})O_{3+\alpha}$ et 70 % en moles de $Pb_{1+\alpha}(Fe_{1/2}Nb_{1/2})O_{3+\alpha}$, séchage, tamisage et calcination à l'air à 720° C pendant 1 heure ;

- troisième mélange-broyage, en phase aqueuse, du produit de calcination additionné d'au moins l'un parmi les trois oxydes $Al_2O_3$, $V_2O_5$, $MnO$, séchage et tamisage.

0078200

1/5

FIG.1

FIG.2

# FIG.3

# FIG.4

FIG.5

FIG.6

FIG.7

FIG.8

# FIG.9

# FIG.10

Office européen
des brevets

**RAPPORT DE RECHERCHE EUROPEENNE**

**0078200**
Numéro de la demande

EP  82 40 1918

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| | --- | | C 04 B   35/00 |
| A | PATENTS ABSTRACTS OF JAPAN, vol. 4, no. 21, 21 février 1980, page 130E172 & JP - A - 54 161 099 (TOKYO DENKI KAGAKU KOGYO K.K.) (20.12.1979) * en entier * | 1,3,5 | H 01 G    4/12 H 01 B    3/12 |
| A | PATENTS ABSTRACTS OF JAPAN, vol. 3, no. 132, 6 novembre 1979, page 44E149 & JP - A - 54 110 498 (NIPPON DENKI K.K.) (29.08.1979) * en entier * | 1,5 | |
| A | PATENTS ABSTRACTS OF JAPAN, vol. 3, no. 132, 6 novembre 1979, page 45E149 & JP - A - 54 110 499 (NIPPON DENKI K.K.) (29.08.1979) * en entier * | 1,3,5 | DOMAINES TECHNIQUES RECHERCHES (Int. Cl. ³) |
| A | PATENTS ABSTRACTS OF JAPAN, vol. 3, no. 132, 6 novembre 1979, page 45E149 & JP - A - 54 110 500 (NIPPON DENKI K.K.) (29.08.1979) * en entier * | 1,3,5 | C 04 B   35/00 H 01 G    4/00 H 01 B    3/00 |
| A | US-A-4 078 938  (M. YONEZAWA) * en entier * | 1,5 | |
| | ----- | | |

Le présent rapport de recherche a été établi pour toutes les revendications

| Lieu de la recherche LA HAYE | Date d'achèvement de la recherche 24-01-1983 | Examinateur SCHURMANS H.D.R. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82